# EUROPÄISCHE PATENTSCHRIFT

(11) **EP 3 475 351 B1**
(45) Veröffentlichungstag und Bekanntmachung des Hinweises auf die Patenterteilung: **21.12.2022**
(21) Anmeldenummer: 17730435.9
(22) Anmeldetag: 08.06.2017
(51) Int. Cl.: C08J 9/00, C08J 9/14, C08G 77/46, C08G 18/06, C08L 83/12, C08L 75/04

(54) **ZUSAMMENSETZUNG GEEIGNET ZUR HERSTELLUNG VON POLYURETHAN- ODER POLYISOCYANURAT-HARTSCHAUMSTOFFEN**
COMPOSITION SUITABLE FOR PREPARING POLYURETHANE OR POLYISOCYANURATE RIGID FOAMS
COMPOSITION CONVENANT POUR LA PRODUCTION DE MOUSSES RIGIDES DE POLYURÉTHANE OU DE POLYISOCYANURATE

(30) Priorität: 23.06.2016 US 201662353704 P
(43) Veröffentlichungstag der Anmeldung: 01.05.2019
(73) Patentinhaber: Evonik Operations GmbH, 45128 Essen (DE)
(72) Erfinder: DIENDORF, Jörg, 45149 Essen (DE); TAUCHEN, Robert, Richmond Virginia 23221 (US); ROWE, Wiley, Richmond Virginia 23227 (US); SCHILLER, Carsten, 40885 Ratingen (DE); EILBRACHT, Christian, 44627 Herne (DE)
(74) Vertreter: Evonik Patent Association
(86) Internationale Anmeldenummer: PCT/EP2017/063947
(87) Internationale Veröffentlichungsnummer: WO 2017/220332

(56) Entgegenhaltungen:
- EP-A1- 0 533 202
- EP-A1- 1 544 235
- EP-A1- 2 465 892

## Beschreibung

Die Erfindung liegt auf dem Gebiet der Polyurethan- und/oder Polyisocyanuratschaumstoffe, insbesondere -hartschaumstoffe, sowie der Polyethersiloxane. Sie betrifft ein Verfahren zur Herstellung von Polyurethan- und/oder Polyisocyanuratschaumstoffen, bevorzugt -hartschaumstoffen, sowie demgemäß erhältliche Schaumstoffe, insbesondere Hartschaumstoffe sowie deren Verwendung.

Bei der Herstellung von Polyurethan- und Polyisocyanurat-Hartschaumstoffen werden gewöhnlich zellstabilisierende Additive eingesetzt, welche für eine feinzellige, gleichmäßige und störungsarme Schaumstruktur sorgen sollen und damit die Gebrauchseigenschaften, besonders das thermische Isolationsvermögen des Hartschaumstoffes, im wesentlichen Maße positiv beeinflussen. Besonders effektiv sind Tenside auf der Basis von Polyether-modifizierten Siloxanen, welche daher den bevorzugten Typ der Schaumstabilisatoren darstellen. In verschiedenen Veröffentlichungen wurden solche Schaumstabilisatoren für Hartschaum-Anwendungen bereits publiziert.

EP 0570174 A1 beschreibt ein Polyethersiloxan der Struktur (CH₃)₃SiO[SiO(CH₃)₂]ₓ [SiO(CH₃)R]_{y}Si(CH₃)₃, dessen Reste R aus einem über eine SiC-Bindung an das Siloxan geknüpften Polyethylenoxid bestehen, welches am anderen Kettenende durch eine C₁-C₆ Acylgruppe endverkappt ist. Dieser Schaumstabilisator eignet sich für die Herstellung von Polyurethan-Hartschäumen unter Verwendung von organischen Treibmitteln, insbesondere Fluorchlorkohlenwasserstoffen wie CFC-11.

Die nächste Generation der Fluorchlorkohlenwasserstoff-Treibmittel sind so genannte Hydrochlorfluorkohlenwasserstoffe, wie z. B. HCFC-123. Bei der Verwendung dieser Treibmittel für die Polyurethan-Hartschaum-Herstellung eignen sich laut EP 0533202 A1 Polyethersiloxane des Strukturtyps (CH₃)₃SiO[SiO(CH₃)₂]ₓ[SiO(CH₃)R]_{y}Si(CH₃)₃. Die Reste R bestehen dort aus SiC-gebundenen Polyalkylenoxiden, die aus Propylenoxid und Ethylenoxid zusammengesetzt sind und am Kettenende eine Hydroxy-, Methoxy- oder Acyloxyfunktion aufweisen können. Der Mindestanteil an Ethylenoxid im Polyether beträgt dabei 25 Massenprozent.

EP 0877045 A1 beschreibt für dieses Herstellverfahren analoge Strukturen, die sich durch ein vergleichsweise höheres Molekulargewicht und durch die Kombination zweier Polyethersubstituenten an der Siloxankette von den erstgenannten Schaumstabilisatoren abheben.

Für die Verwendung von halogenfreien Treibmitteln wie Kohlenwasserstoffen, beschreibt beispielsweise EP 1544235 A1 die Herstellung von Polyurethanhartschäumen unter Verwendung von Polyethersiloxanen der bereits bekannten Struktur (CH₃)₃SiO[SiO(CH₃)₂]ₓ[SiO(CH₃)R]_{y}Si(CH₃)₃ mit einer Mindestkettenlänge des Siloxans von 60 Monomereinheiten und unterschiedlichen Polyethersubstituenten R, deren Mischungsmolgewicht 450 bis 1000 g/mol beträgt und deren Ethylenoxidanteil bei 70 bis 100 mol % liegt.

In DE 102006030531 A1 wird die Verwendung von Polyethersiloxanen, bei denen die Endgruppe der Polyether entweder eine freie OH-Gruppe, eine Alkylether-Gruppe (vorzugsweise Methyl) oder ein Ester ist, als Schaumstabilisatoren beschrieben. Als besonders bevorzugt werden solche Polyethersiloxane verwendet, die freie OH-Funktionen aufweisen. Die Verwendung der speziellen Polyethersiloxane soll insbesondere das Brandverhalten positiv beeinflussen.

Die Verwendung von Schaumstabilisatoren verbessert, wie bereits beschrieben, die Gebrauchseigenschaften der Polyurethanschäume, beispielsweise die Isolationsleistung und die Oberflächeneigenschaften. Grundsätzlich ist die Isolationsleistung der Schaumstoffe unter anderem abhängig von der Umgebungs- bzw. Einsatztemperatur. Dabei ist die Wärmeleitfähigkeit λ (üblicherweise angegeben in W/m·K) temperaturabhängig und in der Regel bei niedrigerer Temperatur geringer als bei höherer Temperatur, das heißt, man erzielt eine bessere Isolationsleistung. Die Abhängigkeit der Wärmeleitfähigkeit von der Temperatur ist nahezu linear. Jedoch ist diese temperaturabhängige Verbesserung insbesondere bei den Isolationsschaumstoffen begrenzt, denn man beobachtet bei hinreichend niedriger Temperatur unter Umständen auch wiederum eine Erhöhung der Wärmeleitfähigkeit, also eine Abnahme der Isolationsleistung. Dies kann bereits bei mäßig niedrigen Temperaturen eintreten, wie sie z.B. in Kühlschränken üblicherweise auftreten. Noch kritischer kann dies z.B. bei Isolationspaneelen sein, die der kalten Witterung und damit stärkeren Abkühlungen ausgesetzt sind.

Diese Beobachtung kann womöglich auf Kondensationseffekte der eingesetzten, normalerweise gasförmig vorliegenden Treibmittel in den Schaumzellen bei tiefen Temperaturen zurückzuführen sein. Diese Effekte hängen wiederum von der Art und Zusammensetzung des eingesetzten Treibmittels, der Schaumdichte und weiteren, teils unbekannten Faktoren ab. Die Zusammenhänge erscheinen äußerst komplex.

Die Wärmeleitfähigkeit weist jedenfalls gewöhnlich, wenn man von hohen zu niedrigen Temperaturen geht, zunächst ein Minimum auf, d.h. der A-Wert verringert sich. Anschließend, in Richtung noch niedrigerer Temperaturen, steigt die Kurve wiederum an, d.h. es resultieren wieder höhere λ-Werte.

Es ist grundsätzlich wünschenswert, einen Schaumstoff zu erhalten, der bei tieferen Temperaturen weiter verbesserte Isolationseigenschaften aufweist.

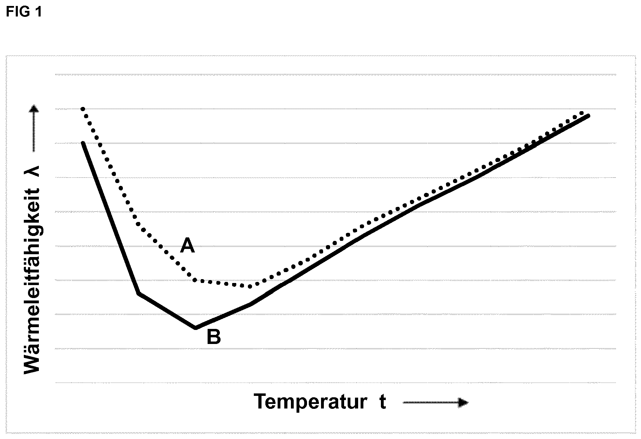

- FIG 1: zeigt den typischen Verlauf der Wärmeleitfähigkeit λ gegen die Temperatur für einen gewöhnlichen PU-Schaum (gepunktete Linie; A). Die durchgezogene Linie (B) zeigt den gewünschten Verlauf mit niedrigeren λ-Wert im Bereich tieferer Temperaturen.

Es bestand deshalb die Aufgabe, Polyurethan- bzw. Polyisocyanurat-Schaumstoffe, insbesondere -Hartschaumstoffe bereitzustellen, die bei tieferen Temperaturen, vorzugsweise bei Temperaturen < 10°C, mit niedrigeren λ-Werten einhergehen, verglichen mit herkömmlichen Schaumstoffen.

Überraschenderweise wurde nun gefunden, dass die Verwendung bestimmter Polyethersiloxane die Bereitstellung entsprechender Polyurethan- bzw. Polyisocyanurat-Schaumstoffe, insbesondere -Hartschaumstoffe, und damit die Lösung der vorgenannten Aufgabe ermöglicht.

Der die Aufgabe lösende Gegenstand der Erfindung ist ein Verfahren zur Herstellung von Polyurethanschaum, vorzugsweise Polyurethanhartschaum, durch Umsetzung mindestens einer Polyolkomponente mit mindestens einer Isocyanatkomponente in Gegenwart mindestens eines Treibmittels und eines oder mehrerer Katalysatoren, die die Reaktionen Isocyanat-Polyol und/oder Isocyanat-Wasser und/oder die Isocyanat-Trimerisierung katalysieren, wobei die Umsetzung in Gegenwart von Polyether-Siloxan-Copolymer der Formel (I) durchgeführt wird,

Ma D_{b} D'c (I)

mit 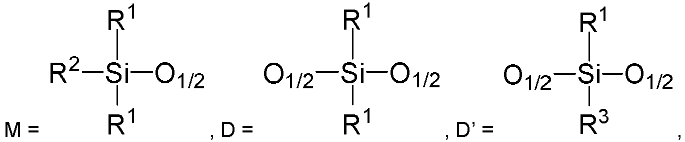
R¹ = unabhängig voneinander gleiche oder verschiedene Kohlenwasserstoffreste mit 1 bis 16 Kohlenstoffatomen oder H, bevorzugt Methyl, Ethyl, Propyl und Phenyl, insbesondere bevorzugt Methyl,
R² = unabhängig voneinander R¹ oder R³, insbesondere R² = R³,
R³ = unabhängig voneinander gleiche oder verschiedene Polyetherreste, bevorzugt Polyetherreste der allgemeinen Formel (II),

   -R⁴O[C₂H₄O]_{d}[C₃H₆O]ₑR⁵ (II),
R⁴ = gleiche oder verschiedene divalente Kohlenwasserstoffreste mit 1 bis 16 Kohlenstoffatomen, die ggf. durch Sauerstoffatome unterbrochen sein können, bevorzugt Rest der allgemeinen Formel (III) 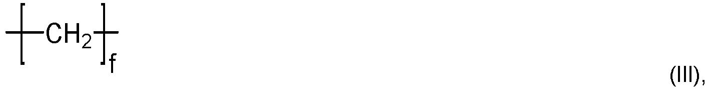
mit f = 1 bis 8, bevorzugt 3,
R⁵ = unabhängig voneinander gleiche oder verschiedene Kohlenwasserstoffreste mit 1 bis 16 Kohlenstoffatomen, die gegebenenfalls durch Urethanfunktionen, -C(O)NH-, Carbonylfunktionen oder -C(O)O- unterbrochen sein können, oder H, bevorzugt Methyl, -C(O)Me oder H,
   mit
a = 2,
a + b + c = 10 bis 200, bevorzugt 20 bis 80, insbesondere bevorzugt 20 bis 50
b/c = 15 bis 50,
d und e = numerische Mittelwerte, die sich aus den folgenden Maßgaben ergeben,
   mit den Maßgaben,
dass das Molgewicht (numerischer Mittelwert Mₙ) der einzelnen Polyetherreste R³ = 600 bis 2000 g/mol, bevorzugt 700 bis 1800 g/mol, insbesondere bevorzugt 800 bis 1700 g/mol beträgt,
dass mindestens ein Rest R³ vorhanden ist, dessen Molgewicht zu 27 bis 60 Massen-%, bevorzugt zu 30 bis 50 Massen-%, insbesondere bevorzugt zu 35 bis 45 Massen-% aus -[C₃H₆O]-Einheiten gebildet wird,
dass der prozentuale Siloxan-Anteil (also das Siloxanrückgrat ohne die Polyethereinheiten) im Polyether-Siloxan-Copolymer 35 bis 60 Massen-%, bevorzugt 40 bis 60 Massen-%, insbesondere bevorzugt 45 bis 55 Massen-% beträgt,
insbesondere sind folgende Bedingungen erfüllt: c > 0, b liegt im Bereich von 1 bis 194, c liegt im Bereich von 1 bis 25, d liegt im Bereich von 5 bis 33, e liegt im Bereich von 2,5 bis 20,
und wobei die Polyethersiloxane der Formel I in einem Gesamtmassenanteil von 0,1 bis 10 Teilen, bevorzugt von 0,5 bis 5 Teilen, insbesondere bevorzugt von 1 bis 3 Teilen, bezogen auf 100 Massenteile Polyolkomponente eingesetzt werden.

Ein weiterer Gegenstand der Erfindung ist ein Polyurethanschaum, insbesondere Polyurethanhartschaum, erhältlich durch ein erfindungsgemäßes Verfahren wie zuvor beschrieben. In einer bevorzugten Ausführungsform zeichnet sich der Polyurethanschaum dadurch aus, dass die Geschlossenzelligkeit ≥ 80%, vorzugsweise ≥ 90 % beträgt, wobei die Geschlossenzelligkeit nach DIN ISO 4590 bestimmt wird.

Außerdem ist Gegenstand der vorliegenden Erfindung die Verwendung von erfindungsgemäßem Polyurethanschaum, insbesondere Polyurethanhartschaum, zur Wärmedämmung in der Kühltechnik, insbesondere in Kühl- und/oder Gefriergeräten, zur Wärmedämmung im Bausektor, vorzugsweise als Dämmplatte oder Sandwichelement, zur Rohrisolation, als Sprühschaum, zur Isolierung von Behälter- und/oder Tankwänden für kryogene Lagerung bei Temperaturen < -50 °C, zur Isolierung von Behälter- und/oder Tankwänden für kalte Lagerung bei Temperaturen von -50 °C bis 20 °C, als Bestandteil von kryogenen Isoliersystemen, vorzugsweise Flüssiggas-Tanks oder Leitungen, insbesondere Tanks oder-Leitungen für Autogas (LPG), flüssiges Ethylen (LEG) oder Flüssigerdgas (LNG), zur Isolierung von Kühl-Containern und -Lastkraftwagen sowie die Verwendung als Isolations- und/oder Füllmaterial in Form von Sprühschaum, der direkt auf die zu isolierende und/oder verfüllende Oberfläche und/oder in entsprechende Kavitäten auf-und/oder eingebracht wird.

Die vorliegende Erfindung wird nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Wenn im nachfolgenden Mittelwerte angegeben sind, so handelt es sich, wenn nicht anders angegeben, um das Zahlenmittel. Wenn nicht anders angegeben, sind Messungen bei Raumtemperatur und Normaldruck durchgeführt worden.

Siloxanverbindungen können anhand eines komprimierten Nomenklaturkurzsystems, wie es dem Fachmann als "MDTQ"-Nomenklatur bekannt ist, identifiziert werden. Nach diesem System wird das Siloxan gemäß dem Vorliegen der verschiedenen Siloxanmonomereinheiten, welche das Silicon aufbauen, beschrieben. Die Bedeutungen der einzelnen Abkürzungen im vorliegenden Dokument werden in der vorliegenden Beschreibung näher erläutert.

Die Parameter der Polyethersiloxane können nach den üblichen dem Fachmann bekannten Verfahren bestimmt werden. Es sei beispielsweise die Kernspinresonanzspektroskopie (NMR-Spektroskopie) genannt. Für Details zur Ausführung der Analytik und der Auswertung wird auf die Publikation EP 2465892 A1 (¹H-NMR), das Kapitel "Silicones in Industrial Applications" in "Inorganic Polymers" von Nova Science Publisher, 2007 (ISBN: 1-60021-656-0) und "Frank Uhlig, Heinrich Chr. Marsmann: 29Si NMR - Some Practical Aspects" im Katalog "Silicon compounds: Silanes and Silicones" der Firma Gelest, Inc. (²⁹Si-NMR) verwiesen. Das Polyether-Molgewicht Mₙ kann beispielsweise mittels Gel-Permeations-Chromatographie bestimmt werden.

Die im erfindungsgemäßen Verfahren einzusetzenden Polyethersiloxane können prinzipiell nach den aus dem Stand der Technik bekannten Verfahren zur Herstellung von Polyethersiloxanen erhalten werden. Detaillierte Beschreibungen und weiterführende Referenzen zu den möglichen Synthesewegen finden sich beispielsweise in EP 2465892 A1.

Die Einsatzmenge der als Schaumstabilisatoren genutzten Polyethersiloxane der Formel I in dem erfindungsgemäßen Verfahren beträgt als Massenanteil, bezogen auf 100 Massenteile Polyolkomponente (pphp), von 0,1 bis 10 pphp, bevorzugt von 0,5 bis 5 pphp, insbesondere bevorzugt von 1 bis 3 pphp.

Welche Stoffe als Isocyanatkomponente, Isocyanat-reaktive Komponente, Urethan- und/oder Isocyanurat-Katalysatoren, Flammschutzmittel und Treibmittel geeignet sind, sowie welche Wassergehalte und Indizes geeignet sind, ist dem Fachmann bekannt und er kann solche Angaben auch dem Stand der Technik entnehmen, beispielsweise der Veröffentlichung DE 102010063241 A1.

Isocyanat-reaktive Komponente im Sinne der vorliegenden Erfindung sind Polyole, und zwar alle zur Herstellung von Polyurethan-Systemen, insbesondere Polyurethan-Beschichtungen, Polyurethan-Elastomeren oder insbesondere Schaumstoffen üblicherweise verwendeten Polyetherpolyole und/oder Polyesterpolyole und/oder hydroxylgruppenhaltigen aliphatischen Polycarbonate, insbesondere Polyetherpolycarbonatpolyole und/oder Polyole natürlicher Herkunft, sogenannte "natural oil based polyols" (NOPs). Üblicherweise besitzen die Polyole eine Funktionalität von 1.8 bis 8 und zahlengemittelte Molekulargewichte im Bereich von 500 bis 15000. Üblicherweise kommen die Polyole mit OH-Zahlen im Bereich von 10 bis 1200 mg KOH/g zum Einsatz.

Zur Herstellung von PU-Hartschäumen kommen bevorzugt Polyole oder Mischungen davon zum Einsatz mit der Maßgabe, dass zumindest 90 Gew.-Teile der enthaltenen Polyole bezogen auf 100 Gew.-Teile Polyolkomponente eine OH-Zahl größer 100, vorzugsweise größer 150, insbesondere größer 200 aufweisen.

Als Isocyanatkomponenten werden vorzugsweise ein oder mehrere organische Polyisocyanate mit zwei oder mehr Isocyanat-Funktionen eingesetzt. Als Isocyanatkomponenten geeignete Isocyanate im Sinne dieser Erfindung sind alle Isocyanate, die mindestens zwei Isocyanat-Gruppen enthalten. Generell können alle an sich bekannten aliphatischen, cycloaliphatischen, arylaliphatischen und vorzugsweise aromatischen mehrfunktionalen Isocyanate verwendet werden. Besonders bevorzugt werden Isocyanate in einem Bereich von 60 bis 200 mol% relativ zu der Summe der isocyanatverbrauchenden Komponenten eingesetzt.

Ein bevorzugtes Verhältnis von Isocyanat und Isocyanat-reaktive Komponente, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 40 bis 350. Ein Index von 100 steht für ein molares Verhältnis der reaktiven Gruppen von 1 zu 1.

Geeignete Katalysatoren im Sinne der vorliegenden Erfindung sind alle Verbindungen, die die Reaktionen Isocyanat-Polyol und/oder Isocyanat-Wasser und/oder die Isocyanat-Trimerisierung katalysieren. Hierbei kann auf die üblichen aus dem Stand der Technik bekannten Katalysatoren zurückgegriffen werden, umfassend z.B. Amine (cyclische, acyclische; Monoamine, Diamine, Oligomere mit einer oder mehreren Aminogruppen), metallorganische Verbindungen und Metallsalze, vorzugsweise die des Zinn, Eisen, Wismut und Zink. Insbesondere können als Katalysatoren Gemische mehrerer Komponenten eingesetzt werden.

Es kann mit chemischen und/oder physikalischen Treibmitteln gearbeitet werden. Die Wahl des Treibmittels hängt hier stark von der Art des Systems ab.

Je nach Menge des verwendeten Treibmittels wird ein Schaum mit hoher oder niedriger Dichte hergestellt. So können Schäume mit Dichten von 5 kg/m³ bis 900 kg/m³ hergestellt werden. Bevorzugte Dichten sind 8 bis 800, besonders bevorzugt 10 bis 600 kg/m³, insbesondere 30 bis 150 kg/m³.

Als physikalische Treibmittel können entsprechende Verbindung mit passenden Siedepunkten eingesetzt werden. Ebenso können chemische Treibmittel eingesetzt werden, die mit NCO-Gruppen und Freisetzung von Gase reagieren, wie beispielsweise Wasser oder Ameisensäure. Beispiele für Treibmittel sind verflüssigtes CO₂, Stickstoff, Luft, leichtflüchtige Flüssigkeiten, beispielsweise Kohlenwasserstoffe mit 3, 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Hydrofluorolefine (HFO) oder Hydrohalogenolefine wie z.B. trans-1-Chlor-3,3,3-trifluorpropen (Solstice^{®} 1233zd (E) der Firma Honeywell), oder cis-1,1,1,4,4,4-Hexafluor-2-buten (Opteon^{®} 1100 HFO-1336mzz-Z der Firma Chemours/DuPont), Sauerstoff-haltige Verbindungen wie Methylformiat, Aceton und Dimethoxymethan, oder Chlorkohlenwasserstoffe, bevorzugt Dichlormethan und 1,2-Dichlorethan.

In DE 102010063241 A1 sind noch weiterführende Literaturstellen genannt, auf die hiermit explizit Bezug genommen wird.

Zur Herstellung des Polyurethan- oder Polyisocyanurat-Schaums in dem erfindungsgemäßen Verfahren werden vorzugsweise Zusammensetzungen eingesetzt, die durch Kombination von zwei oder mehr getrennt vorliegenden Komponenten erhältlich sind. Hierbei ist eine der Komponenten die Isocyanat-reaktive Komponente (im Allgemeinen als "A-Komponente", im amerikanischen Raum auch als "B-Komponente" bezeichnet) und eine andere Komponente die Isocyanatkomponente (im Allgemeinen als "B-Komponente", im amerikanischen Raum auch als "A-Komponente" bezeichnet) ist. In der Regel enthält die Isocyanat-reaktive Komponente als Mischung, das oder die als Schaumstabilisator(en) eingesetzte(n) Polyethersiloxan(e) und die weiteren Additive wie Flammschutzmittel, Treibmittel, Katalysatoren, Wasser usw.

Als weitere Zusatzstoffe können alle nach dem Stand der Technik bekannten Substanzen verwendet werden, die bei der Herstellung von Polyurethanen, insbesondere von Polyurethanschaumstoffen, Verwendung finden, wie zum Beispiel Vernetzer und Kettenverlängerer, Stabilisatoren gegen oxidativen Abbau (so genannte Antioxidantien), Tenside, Biozide, zellverfeinernde Additive, Zellöffner, feste Füllstoffe, Antistatik-Additive, Nukleierungsmittel, Verdicker, Farbstoffe, Pigmente, Farbpasten, Duftstoffe, Emulgatoren, usw.

Durch das erfindungsgemäße Verfahren können Polyurethan- oder Polyisocyanurat-Schaumstoffe, vorzugsweise Hartschaumstoffe erhalten werden. Insbesondere können die erfindungsgemäßen Zusammensetzungen zur Herstellung von Polyurethan- oder Polyisocyanurat-Schaumstoffformkörpern verwendet werden. Das erfindungsgemäße Verfahren beinhaltet besonders bevorzugt die Verwendung einer Sprühschaumapparatur oder eines Mischkopfes in Verbindung mit einer Hoch- oder Niederdruck-Verschäumungsmaschine. Die erhaltenen Schäume können in allen kontinuierlichen oder diskontinuierlichen Verfahren produziert und der erhaltene Schaum weiterverarbeitet werden. Dies umschließt beispielsweise die Produktion als Blockschaum, auf Doppelbandlaminatoren, durch Einspritzen in eine Kavität und die Anwendung als Isoliermaterial in der Kühltechnik (z.B. in Kühlgeräten, Kühlschränken, der Automobilindustrie, Flüssiggastransporte etc), der Isolations- und Bautechnik (z.B. als Dämmplatte, Verbundelement mit flexiblen oder starren Deckschichten oder als sprühbarer Isolierschaum) und in weiteren Anwendungen wie als Konstruktions- oder Klebmaterial.

Offenbart wird auch ein Verfahren zur Erniedrigung der Wärmeleitfähigkeit von Polyurethanschaumstoffen, insbesondere Polyurethanhartschaumstoffen, im Temperaturbereich -200 °C bis 10 °C, vorzugsweise -50 °C bis 10°C, insbesondere -20 °C bis 10°C, durch Einsatz von Polyether-Siloxan-Copolymer der Formel (I) bei der Herstellung des Polyurethanschaumstoffs, vorzugsweise in einer Menge von 0,1 bis 10 Teilen, bevorzugt von 0,5 bis 5 Teilen, insbesondere bevorzugt von 1 bis 3 Teilen bezogen auf 100 Teile isocyanatreaktiver Polyol-Komponente, wobei die Zugabe vor und/oder während der Herstellung des Polyurethanschaumstoffs erfolgen kann.

Offenbart wird außerdem die Verwendung von Polyether-Siloxan-Copolymer der Formel (I) zur Herstellung von Polyurethanschaumstoffen, insbesondere Polyurethanhartschaumstoffen, die im Temperaturbereich -200 °C bis 10 °C, vorzugsweise -50 °C bis 10°C, insbesondere -20 °C bis 10°C eine verbesserte Isolationsleistung aufweisen.

Für eine noch weitergehende Darstellung inklusive weiterführender Literatur, bevorzugter, typischer Formulierungen, möglicher Verarbeitungs- und Verwendungsbeispiele des erhältlichen Schaumstoffes und der damit herstellbaren Produkte sei beispielsweise auf die Schriften EP 2465892 A1, DE 102010063241 A1 und WO 2009092505 A1 verwiesen.

In den nachfolgend aufgeführten Beispielen wird die vorliegende Erfindung beispielhaft beschrieben, ohne dass die Erfindung, deren Anwendungsbreite sich aus den Ansprüchen ergibt, auf die in den Beispielen genannten Ausführungsformen beschränkt sein soll.

### Beispiele:

Es wurden Polyurethanhartschaumstoffe hergestellt, um den Einsatz verschiedener erfindungsgemäßer und nicht erfindungsgemäßer Schaumstabilisatoren in dem beanspruchten Verfahren zu untersuchen. Dazu wurde die Formulierung gemäß Tabelle 1 eingesetzt.

**Tabelle 1**

| **Nr.** | **Komponente** | | | | **Funktion** | **Einsatzteile** | | | |
|---|---|---|---|---|---|---|---|---|---|
| 1 | Stepanpol^{®} PS 2352 | | | | Polyol | 100,0 | | | |
| 2 | Tris(2-chlorisopropyl)phosphat (TCPP) | | | | Flammschutz -mittel | 15,0 | | | |
| 3 | KOSMOS^{®} 75 | | | | Metallkatalysator | 3,5 | | | |
| 4 | KOSMOS^{®} 33 | | | | Metallkatalysator | 1,0 | | | |
| 5 | Tegoamin^{®} PMDETA | | | | Aminkatalysator | 0,2 | | | |
| 6 | Wasser | | | | Treibmittel | 0,3 | | | |
| 7 | n-Penta n | iso-Pentan | n-/iso-Pentan (50:50 %) | Solstice^{®} 1233zd (E) | Treibmittel | 20,0 | 20,0 | 20,0 | 36,2 |
| 8 | Stabilisator 1-8 | | | | Schaumstabilisator | 2,0 | | | |
| 9 | Lupranate^{®} M70L | | | | Isocyanat | 180,0 | | | |

Die Verschäumungen wurden durchgeführt mit einer Hochdruck-Verschäumungsmaschine vom Typ KraussMaffei RIM-Star MiniDos mit einem MK12/18ULP-2KVV-G-80-I Mischkopf, und einem KraussMaffei Microdos Additiv-Dosiersystem. Die Komponenten 1-7 befanden sich im Polyol-Vorlagebehälter, der Schaumstabilisator 8 wurde mit dem Microdos-Dosiersystem direkt im Mischkopf in den Polyolstrom zudosiert. Die Einsatztemperatur des Polyolblends betrug 30 °C, die der Isocyanatkomponente 9 betrug 25 °C, das Isocyanat/Polyolblend-Verhältnis betrug 1,268. Die flüssige Schaummischung wurde in eine auf 40 °C beheizte Metallform mit den Innenmaßen 50 cm · 50 cm · 5 cm eingeschossen und bis zur Aushärtung des Schaums darin belassen. Aus dem dadurch erhaltenen Schaum-Formkörper wurden zwei Probenkörper mit den Maßen 20 cm · 20 cm · 0,5 cm herausgeschnitten und für die Messungen der Wärmeleitfähigkeiten verwendet. Die verwendeten λ-Werte sind jeweils Mittelwerte aus diesen beiden Messungen. Die Wärmeleitfähigkeiten der Probenkörper wurden in einem Gerät des Typs LaserComp Heat Flow Meter gemessen

Die für die Beispiele eingesetzten Stabilisatoren sind in Tabelle 2 aufgelistet.

**Tabelle 2**

| | **erfindungsgemäß ?** | **R²** | **a+b+c** | **b/c** | **Mₙ von R³** | **Gew.-% PO in R³** | **R⁵** | **Gew.-% Siloxan** |
|---|---|---|---|---|---|---|---|---|
| **Stabilisator 1** | ja | R³ | 50 | 15 | 1000 | 40 | H | 42 |
| **Stabilisator 2** | nein | CH₃ | 30 | 10 | 1000 | 40 | CH₃ | 46 |
| **Stabilisator 3** | ja | CH₃ | 30 | 15 | 1000 | 40 | H | 56 |
| **Stabilisator 4** | nein | CH₃ | 30 | 10 | 700 | 40 | H | 55 |
| **Stabilisator 5** | ja | R³ | 30 | 30 | 700 | 40 | H | 52 |
| **Stabilisator 6** | nein (Vergleich) | CH₃ | 50 | 5 | 700 | 40 | H | 39 |
| **Stabilisator 7** | nein (Vergleich) | CH₃ | 50 | 10 | 700 | 20 | H | 55 |
| **Stabilisator 8** | nein (Vergleich) | CH₃ | 30 | 10 | 700 | 0 | H | 55 |

### Beispiel 1

Die Formulierung aus Tabelle 1 wurde wie dort angegeben mit 20 Teilen n-Pentan als Treibmittel verschäumt. Als Schaumstabilisatoren wurden die Stabilisatoren 2 (nicht erfindungsgemäß) sowie 3 und 5 (erfindungsgemäß) und die Stabilisatoren 6 und 7 als nicht erfindungsgemäße Vergleichsbeispiele eingesetzt. Es wurden die in Tabelle 3 (alle Wärmeleitfähigkeits-Angaben in mW/m·K) gezeigten Messwerte für die temperaturabhängigen Wärmeleitfähigkeiten erhalten.

**Tabelle 3 (alle Wärmeleitfähigkeits-Angaben in mW/m·K) .**

| **Temperatur (° C)** | **-5** | **0** | **5** | **10** | **15** | **20** | **25** | **30** | **35** | **40** |
|---|---|---|---|---|---|---|---|---|---|---|
| **Stabilisator 2 (Nicht Erf.)** | 24,28 | 22,87 | 21,69 | 21,72 | 21,81 | 22,12 | 22,34 | 22,71 | 22,88 | 23,19 |
| **Stabilisator 3 (Erf.)** | 24,02 | 22,74 | 21,65 | 21,63 | 21,76 | 21,93 | 22,21 | 22,53 | 22,70 | 22,96 |
| **Stabilisator 5 (Erf.)** | 23,67 | 22,69 | 21,53 | 21,57 | 21,73 | 22,10 | 22,28 | 22,51 | 22,71 | 23,09 |
| **Stabilisator 6 (Vergl.)** | 24,41 | 23,51 | 22,41 | 21,79 | 21,91 | 22,20 | 22,42 | 22,67 | 22,81 | 23,21 |
| **Stabilisator 7 (Vergl.)** | 24,39 | 23,53 | 22,51 | 21,85 | 21,87 | 22,24 | 22,47 | 22,59 | 22,75 | 23,14 |

Der Tabelle ist zu entnehmen, dass die mit den erfindungsgemäßen Schaumstabilisatoren 3 und 5 produzierten Schäume eine geringere Wärmeleitfähigkeit bei geringer werdender Messtemperatur aufweisen als die Schäume mit den nicht erfindungsgemäßen Stabilisatoren 6 und 7. Das Minimum des Wärmeleitfähigkeits-Verlaufs ist zu niedrigeren Temperaturen verschoben und es wird eine bessere Isolationsleistung bei vergleichbarer Temperatur erhalten.

### Beispiel 2

Die Formulierung aus Tabelle 1 wurde wie dort angegeben mit 20 Teilen iso-Pentan als Treibmittel verschäumt. Als Schaumstabilisatoren wurden die Kandidaten 1 (erfindungsgemäß) und 4 (nicht erfindungsgemäß) und der Kandidat 8 als nicht erfindungsgemäßes Vergleichsbeispiel eingesetzt. Es wurden die in Tabelle 4 (alle Wärmeleitfähigkeits-Angaben in mW/m·K) gezeigten Messwerte für die temperaturabhängigen Wärmeleitfähigkeiten erhalten.

**Tabelle 4 (alle Wärmeleitfähigkeits-Angaben in mW/m·K)**

| **Temperatur (° C)** | **-5** | **0** | **5** | **10** | **15** | **20** | **25** | **30** | **35** | **40** |
|---|---|---|---|---|---|---|---|---|---|---|
| **Stabilisator 1 (Erf.)** | 24,1 | 22,57 | 21,53 | 21,54 | 21,67 | 22,02 | 22,13 | 22,51 | 22,75 | 22,88 |
| **Stabilisator 4 (Nicht Erf.)** | 23,85 | 22,44 | 21,41 | 21,50 | 21,59 | 21,84 | 22,18 | 22,43 | 22,61 | 22,81 |
| **Stabilisator 8 (Vergl.)** | 24,33 | 23,48 | 22,21 | 21,67 | 21,83 | 22,11 | 22,24 | 22,53 | 22,74 | 22,95 |

Der Tabelle ist zu entnehmen, dass die mit dem erfindungsgemäßen Schaumstabilisator 1 produzierten Schäume eine geringere Wärmeleitfähigkeit bei geringer werdender Messtemperatur aufweisen als die Schäume mit dem nicht erfindungsgemäßen Stabilisator 8. Das Minimum des Wärmeleitfähigkeits-Verlaufs ist zu niedrigeren Temperaturen verschoben und es wird eine bessere Isolationsleistung bei vergleichbarer Temperatur erhalten.

### Beispiel 3

Die Formulierung aus Tabelle 1 wurde wie dort angegeben mit 20 Teilen eines Gemisches aus 50 % n-Pentan und 50 % iso-Pentan als Treibmittel verschäumt. Als Schaumstabilisatoren wurden die Kandidaten 2 (nicht erfindungsgemäß) sowie 3 und 5 (erfindungsgemäß) und die Kandidaten 6 und 7 als nicht erfindungsgemäße Vergleichsbeispiele eingesetzt. Es wurden die in Tabelle 5 (alle Wärmeleitfähigkeits-Angaben in mW/m·K) gezeigten Messwerte für die temperaturabhängigen Wärmeleitfähigkeiten erhalten.

**Tabelle 5 (alle Wärmeleitfähigkeits-Angaben in mW/m·K)**

| **Temperatur (° C)** | **-5** | **0** | **5** | **10** | **15** | **20** | **25** | **30** | **35** | **40** |
|---|---|---|---|---|---|---|---|---|---|---|
| **Stabilisator 2 (Nicht Erf.)** | 23,89 | 22,69 | 21,52 | 21,55 | 21,69 | 22,00 | 22,19 | 22,62 | 22,71 | 23,05 |
| **Stabilisator 3 (Erf.)** | 23,94 | 22,7 | 21,55 | 21,51 | 21,62 | 21,85 | 22,21 | 22,52 | 22,65 | 22,81 |
| **Stabilisator 5 (Erf.)** | 23,57 | 22,61 | 21,49 | 21,45 | 21,58 | 22,01 | 22,28 | 22,51 | 22,55 | 23,04 |
| **Stabilisator 6 (Vergl.)** | 24,35 | 23,21 | 22,52 | 21,69 | 21,77 | 22,01 | 22,32 | 22,56 | 22,81 | 23,02 |
| **Stabilisator 7 (Vergl.)** | 24,28 | 23,5 | 22,59 | 21,81 | 21,81 | 21,97 | 22,37 | 22,52 | 22,63 | 23,08 |

Der Tabelle ist zu entnehmen, dass die mit den erfindungsgemäßen Schaumstabilisatoren 3 und 5 produzierten Schäume eine geringere Wärmeleitfähigkeit bei geringer werdender Messtemperatur aufweisen als die Schäume mit den nicht erfindungsgemäßen Stabilisatoren 6 und 7. Das Minimum des Wärmeleitfähigkeits-Verlaufs ist zu niedrigeren Temperaturen verschoben und es wird eine bessere Isolationsleistung bei vergleichbarer Temperatur erhalten.

### Beispiel 4

Die Formulierung aus Tabelle 1 wurde wie dort angegeben mit 36,2 Teilen Solstice^{®} 1233zd (E) der Firma Honeywell als Treibmittel verschäumt. Als Schaumstabilisatoren wurden die Kandidaten 1 (erfindungsgemäß) sowie 2 und 4 (nicht erfindungsgemäß) und die Kandidaten 6 und 7 als nicht erfindungsgemäße Vergleichsbeispiele eingesetzt. Es wurden die in Tabelle 6 (alle Wärmeleitfähigkeits-Angaben in mW/m·K) gezeigten Messwerte für die temperaturabhängigen Wärmeleitfähigkeiten erhalten.

**Tabelle 6 (alle Wärmeleitfähigkeits-Angaben in mW/m·K)**

| **Temperatur (° C)** | **-5** | **0** | **5** | **10** | **15** | **20** | **25** | **30** | **35** | **40** |
|---|---|---|---|---|---|---|---|---|---|---|
| **Stabilisator 1 (Erf.)** | 18,78 | 17,59 | 17,5 | 17,82 | 18,33 | 18,83 | 19,21 | 19,47 | 19,8 | 20,08 |
| **Stabilisator 2 (Nicht Erf.)** | 18,95 | 17,5 | 17,52 | 18,03 | 18,42 | 18,74 | 19,01 | 19,37 | 19,66 | 19,95 |
| **Stabilisator 4 (Nicht Erf.)** | 19,11 | 17,47 | 17,61 | 17,92 | 18,35 | 18,78 | 18,98 | 19,53 | 19,76 | 19,99 |
| **Stabilisator 6 (Vergl.)** | 19,62 | 18,29 | 17,88 | 17,96 | 18,4 | 18,7 | 19,1 | 19,45 | 19,69 | 19,89 |
| **Stabilisator 7 (Vergl.)** | 19,76 | 18,17 | 17,83 | 17,87 | 18,31 | 18,69 | 18,85 | 19,55 | 19,86 | 20,13 |

Der Tabelle ist zu entnehmen, dass die mit dem erfindungsgemäßen Schaumstabilisator 1 produzierten Schäume eine geringere Wärmeleitfähigkeit bei geringer werdender Messtemperatur aufweisen als die Schäume mit den nicht erfindungsgemäßen Stabilisatoren 6 und 7. Das Minimum des Wärmeleitfähigkeits-Verlaufs ist zu niedrigeren Temperaturen verschoben und es wird eine bessere Isolationsleistung bei vergleichbarer Temperatur erhalten.

## Patentansprüche

1. Verfahren zur Herstellung von Polyurethanschaum durch Umsetzung mindestens einer Polyolkomponente mit mindestens einer Isocyanatkomponente in Gegenwart mindestens eines Treibmittels und eines oder mehrerer Katalysatoren, die die Reaktionen Isocyanat-Polyol und/oder Isocyanat-Wasser und/oder die Isocyanat-Trimerisierung katalysieren, **dadurch gekennzeichnet, dass** die Umsetzung in Gegenwart von Polyether-Siloxan-Copolymer der Formel (I) durchgeführt wird,
Ma D_{b} D'c (I)
mit 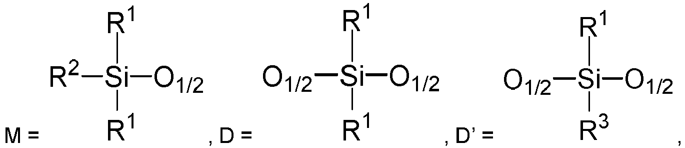
R¹ = unabhängig voneinander gleiche oder verschiedene Kohlenwasserstoffreste mit 1 bis 16 Kohlenstoffatomen oder H, bevorzugt Methyl, Ethyl, Propyl und Phenyl, insbesondere bevorzugt Methyl,
R² = unabhängig voneinander R¹ oder R³,
R³ = unabhängig voneinander gleiche oder verschiedene Polyetherreste, bevorzugt Polyetherreste der allgemeinen Formel (II),
-R⁴O[C₂H₄O]_{d}[C₃H₆O]ₑR⁵ (II),
R⁴ = gleiche oder verschiedene divalente Kohlenwasserstoffreste mit 1 bis 16 Kohlenstoffatomen, die ggf. durch Sauerstoffatome unterbrochen sein können, bevorzugt Rest der allgemeinen Formel (III) 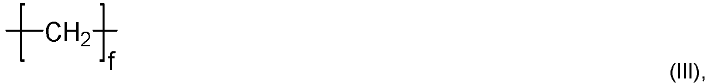
mit f = 1 bis 8, bevorzugt 3,
R⁵ = unabhängig voneinander gleiche oder verschiedene Kohlenwasserstoffreste mit 1 bis 16 Kohlenstoffatomen die gegebenenfalls durch Urethanfunktionen, -C(O)NH-, Carbonylfunktionen oder -C(O)O- unterbrochen sein können, oder H, bevorzugt Methyl, -C(O)Me oder H,
mit
a = 2,
a + b + c = 10 bis 200, bevorzugt 20 bis 80, insbesondere bevorzugt 20 bis 50,
b/c= 15 bis 50,
d und e = numerische Mittelwerte, die sich aus den folgenden Maßgaben ergeben,
mit den Maßgaben,
dass das Molgewicht (numerischer Mittelwert Mₙ) der einzelnen Polyetherreste R³ = 600 bis 2000 g/mol, bevorzugt 700 bis 1800 g/mol, insbesondere bevorzugt 800 bis 1700 g/mol beträgt,
dass mindestens ein Rest R³ vorhanden ist, dessen Molgewicht zu 27 bis 60 Massen-%, bevorzugt zu 30 bis 50 Massen-%, insbesondere bevorzugt zu 35 bis 45 Massen-% aus -[C₃H₆O]-Einheiten gebildet wird,
dass der prozentuale Siloxan-Anteil im Polyether-Siloxan-Copolymer 35 bis 60 Massen-%, bevorzugt 40 bis 60 Massen-%, insbesondere bevorzugt 45 bis 55 Massen-% beträgt,
und wobei die Polyethersiloxane der Formel I in einem Gesamtmassenanteil von 0,1 bis 10 Teilen, bevorzugt von 0,5 bis 5 Teilen, insbesondere bevorzugt von 1 bis 3 Teilen, bezogen auf 100 Massenteile Polyolkomponente eingesetzt werden.

2. Verfahren nach Anspruch 1, **dadurch gekennzeichnet, dass** R² = R³ ist.

3. Verfahren nach einem der Ansprüche 1 oder 2, **dadurch gekennzeichnet, dass** der Polyurethanschaum ein Polyurethanhartschaum ist.

4. Verfahren nach einem der Ansprüche 1 bis 3, **dadurch gekennzeichnet, dass** zumindest 90 Gew.-Teile der enthaltenen Polyole bezogen auf 100 Gew.-Teile Polyolkomponente eine OH-Zahl größer 100, vorzugsweise größer 150, insbesondere größer 200 aufweisen.

5. Verfahren nach einem der Ansprüche 1 bis 4, **dadurch gekennzeichnet, dass** Kohlenwasserstoffe mit 3, 4 oder 5 Kohlenstoff-Atomen, wie insbesondere cyclo-, iso- und/oder n-Pentan, Fluorkohlenwasserstoffe, Fluorchlorkohlenwasserstoffe, Hydrohalogenolefine, bevorzugt Hydrofluorolefine, wie insbesondere trans-1-Chlor-3,3,3-trifluorpropen und/oder cis-1,1,1,4,4,4-Hexafluor-2-buten, Sauerstoff-haltige Verbindungen, wie insbesondere Methylformiat, Aceton und/oder Dimethoxymethan, oder Chlorkohlenwasserstoffe, wie insbesondere Dichlormethan und/oder 1,2-Dichlorethan als Treibmittel eingesetzt werden.

6. Polyurethanschaum, insbesondere Polyurethanhartschaum, erhältlich durch ein Verfahren nach einem der Ansprüche 1 bis 5.

7. Polyurethanschaum nach Anspruch 6, **dadurch gekennzeichnet, dass** die Geschlossenzelligkeit ≥ 80%, vorzugsweise ≥ 90 % beträgt, wobei die Geschlossenzelligkeit nach DIN ISO 4590 bestimmt wird.

8. Verwendung von Polyurethanschaum gemäß Anspruch 6 oder 7
zur Wärmedämmung in der Kühltechnik, insbesondere in Kühl- und/oder Gefriergeräten,
zur Wärmedämmung im Bausektor, vorzugsweise als Dämmplatte, Sandwichelement,
zur Rohrisolation, als Sprühschaum,
zur Isolierung von Behälter- und/oder Tankwänden für kryogene Lagerung bei Temperaturen < -50°C,
zur Isolierung von Behälter- und/oder Tankwänden für kalte Lagerung bei Temperaturen von -50°C bis 20°C,
als Bestandteil von kryogenen Isoliersystemen, vorzugsweise Flüssiggas-Tanks oder-Leitungen, insbesondere Tanks oder -Leitungen für Autogas (LPG), flüssiges Ethylen (LEG) oder Flüssigerdgas (LNG).

9. Verwendung von Polyurethanschaum gemäß Anspruch 6 oder 7 als Isolations- und/oder Füllmaterial in Form von Sprühschaum, der direkt auf die zu isolierende und/oder verfüllende Oberfläche und/oder in entsprechende Kavitäten auf- und/oder eingebracht wird.

## Claims

1. Process for producing polyurethane foam by reacting at least one polyol component with at least one isocyanate component in the presence of at least one blowing agent and of one or more catalysts that catalyse the isocyanate-polyol and/or isocyanate-water reactions and/or isocyanate trimerization, **characterized in that** the reaction is conducted in the presence of polyethersiloxane copolymer of the formula (I)
Mₐ D_{b} D'_{c} (I)
with 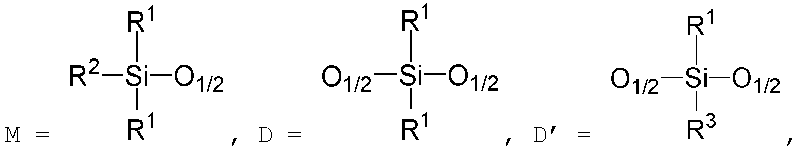
R¹ = independently identical or different hydrocarbyl radicals having 1 to 16 carbon atoms or H, preferably methyl, ethyl, propyl and phenyl, especially preferably methyl,
R² = independently R¹ or R³,
R³ = independently identical or different polyether radicals, preferably polyether radicals of the general formula (II)
-R⁴O[C₂H₄O]_{d}[C₃H₆O]ₑR⁵ (II),
R⁴ = identical or different divalent hydrocarbyl radicals which have 1 to 16 carbon atoms and may optionally be interrupted by oxygen atoms, preferably a radical of the general formula (III) 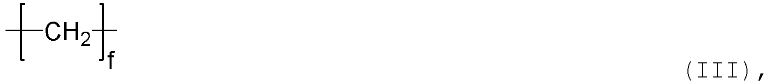
with f = 1 to 8, preferably 3,
R⁵ = independently identical or different hydrocarbyl radicals which have 1 to 16 carbon atoms and may optionally be interrupted by urethane functions, -C(O)NH-, carbonyl functions or -C(O)O-, or H, preferably methyl, -C(O)Me or H,
with
a = 2,
a + b + c = 10 to 200, preferably 20 to 80, especially preferably 20 to 50,
b/c = 15 to 50,
d and e = numerical averages which arise from the following provisos:
with the provisos
that the molar mass (numerical average Mₙ) of the individual polyether radicals R³ = 600 to 2000 g/mol,
preferably 700 to 1800 g/mol, especially preferably 800 to 1700 g/mol,
that at least one R³ radical present has a molar mass formed to an extent of 27% to 60% by mass, preferably to an extent of 30% to 50% by mass and especially preferably to an extent of 35% to 45% by mass from -[C₃H₆O]- units, that the percentage siloxane content in the polyethersiloxane copolymer is 35% to 60% by mass, preferably 40% to 60% by mass, especially preferably 45% to 55% by mass, and wherein the polyether siloxanes of the formula I are used in a total proportion by mass of 0.1 to 10 parts, preferably of 0.5 to 5 parts, especially preferably of 1 to 3 parts, based on 100 parts by mass of polyol component.

2. Process according to Claim 1, **characterized in that** R² = R³.

3. Process according to either of Claims 1 and 2, **characterized in that** the polyurethane foam is a rigid polyurethane foam.

4. Process according to any of Claims 1 to 3, **characterized in that** at least 90 parts by weight of the polyols present, based on 100 parts by weight of polyol component, have an OH number greater than 100, preferably greater than 150, especially greater than 200.

5. Process according to any of Claims 1 to 4, **characterized in that** hydrocarbons having 3, 4 or 5 carbon atoms, such as, in particular, cyclo-, iso- and/or n-pentane, hydrofluorocarbons, hydrochlorofluorocarbons, hydrohaloolefins, preferably hydrofluoroolefins, such as, in particular, trans-1-chloro-3,3,3-trifluoropropene and/or cis-1,1,1,4,4,4-hexafluoro-2-butene, oxygencontaining compounds, such as, in particular, methyl formate, acetone and/or dimethoxymethane, or hydrochlorocarbons, such as, in particular, dichloromethane and/or 1,2-dichloroethane are used as blowing agents.

6. Polyurethane foam, especially rigid polyurethane foam, obtainable by a process according to any of Claims 1 to 5.

7. Polyurethane foam according to Claim 6, **characterized in that** the closed cell content is ≥ 80%, preferably ≥ 90%, the closed cell content being determined according to DIN ISO 4590.

8. Use of polyurethane foam according to Claim 6 or 7
for thermal insulation in cooling technology, especially in refrigerators and/or freezers,
for thermal insulation in the construction sector, preferably as an insulation panel, sandwich element,
for pipe insulation, as a sprayable foam,
for insulation of vessel and/or tank walls for cryogenic storage at temperatures < -50°C,
for insulation of vessel and/or tank walls for cold storage at temperatures of -50°C to 20°C,
as a constituent of cryogenic insulation systems, preferably liquefied gas tanks or conduits, especially tanks or conduits for automotive gas (LPG), liquid ethylene (LEG) or liquefied natural gas (LNG).

9. Use of polyurethane foam according to Claim 6 or 7 as insulation material and/or filler material in the form of sprayable foam which is applied directly to the surface to be insulated and/or filled and/or introduced into appropriate cavities.

## Revendications

1. Procédé de fabrication d'une mousse de polyuréthane par réaction d'au moins un composant polyol avec au moins un composant isocyanate en présence d'au moins un agent gonflant et d'un ou plusieurs catalyseurs, qui catalysent la réaction isocyanate-polyol et/ou isocyanate-eau et/ou la trimérisation de l'isocyanate, **caractérisé en ce que** la réaction est mise en œuvre en présence d'un copolymère polyéther-siloxane de formule (I)
MₐD_{b}D'_{c} (I)
dans laquelle 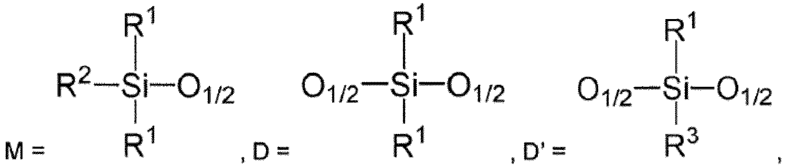
R¹ = des radicaux hydrocarbonés, indépendamment les uns des autres identiques ou différents, ayant 1 à 16 atomes de carbone ou H, de préférence un méthyle, un éthyle, un propyle et un phényle, d'une manière particulièrement préférée un méthyle,
R² = indépendamment l'un de l'autre R¹ ou R³,
R³ = des radicaux polyéther indépendamment les uns des autres identiques ou différents, de préférence des radicaux polyéther de formule générale (II),
**-R⁴O[C₂H₄O]_{d}[C₃H₆O]ₑR⁵** **(II),**
R⁴ = des radicaux hydrocarbonés divalents identiques ou différents ayant 1 à 16 atomes de carbone, qui peuvent éventuellement être interrompus par des atomes d'oxygène, de préférence un radical de formule générale (III) 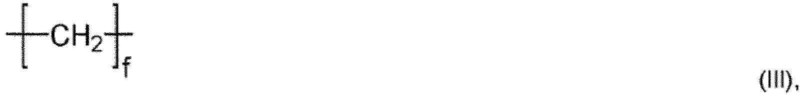
dans laquelle f = 1 à 8, de préférence 3,
R⁵ = des radicaux hydrocarbonés indépendamment les uns des autres identiques ou différents ayant 1 à 16 atomes de carbone, qui peuvent éventuellement être interrompus par des fonctions uréthane, -C(O)NH-, des fonctions carbonyle ou -C(O)O-, ou H, de préférence un méthyle, - C(O)Me ou H,
dans laquelle
a = 2,
a + b + c = 10 à 200, de préférence 20 à 80, d'une manière particulièrement préférée 20 à 50,
b/c = 15 à 50,
d et e = des moyennes en nombre, qui découlent des conditions suivantes,
avec les conditions selon lesquelles :
la masse moléculaire (moyenne en nombre Mₙ) des radicaux polyéther R³ individuel doit être de 600 à 2 000 g/mol, de préférence de 700 à 1 800 g/mol, d'une manière particulièrement préférée de 800 à 1 700 g/mol,
au moins un radical R³ doit être présent, dont la masse moléculaire est, à raison de 27 à 60 % en masse, de préférence de 30 à 50 % en masse, d'une manière particulièrement préférée de 35 à 45 % en masse, doit être constituée de motifs -[C₃H₆O]-,
le pourcentage de siloxane dans le copolymère polyéther-siloxane doit être de 35 à 60 % en masse, de préférence de 40 à 60 % en masse, d'une manière particulièrement préférée de 45 à 55 % en masse,
les polyéthersiloxanes de formule I étant utilisés selon une proportion totale en masse de 0,1 à 10 parties, de préférence de 0,5 à 5 parties, d'une manière particulièrement préférée de 1 à 3 parties pour 100 parties en masse du composant polyol.

2. Procédé selon la revendication 1, **caractérisé en ce que** R² = R³.

3. Procédé selon l'une des revendications 1 ou 2, **caractérisé en ce que** la mousse de polyuréthane est une mousse rigide de polyuréthane.

4. Procédé selon l'une des revendications 1 à 3, **caractérisé en ce qu'**au moins 90 parties en poids des polyols obtenus, pour 100 parties en poids du composant polyol, présentent un indice d'OH supérieur à 100, de préférence supérieur à 150, en particulier supérieur à 200.

5. Procédé selon l'une des revendications 1 à 4, **caractérisé en ce qu'**on utilise en tant qu'agent gonflant des hydrocarbures ayant 3, 4 ou 5 atomes de carbone, tels en particulier que le cyclo-, l'iso-et/ou le n-pentane, les hydrocarbures fluorés, les hydrocarbures chlorofluorés, les hydrohalogénooléfines, de préférence les hydrofluorooléfines, telless qu'en particulier le trans-1-chloro-3,3,3-trifluoropropène et/ou le cis-1,1,1,4,4,4-hexafluoro-2-butène, les composés oxygénés, tels qu'en particulier le formiate de méthyle, l'acétone et/ou le diméthoxyméthane, ou les hydrocarbures chlorés tels en particulier que le dichlorométhane et/ou le 1,2-dichloroéthane.

6. Mousse de polyuréthane, en particulier mousse rigide de polyuréthane, pouvant être obtenue par un procédé selon l'une des revendications 1 à 5.

7. Mousse de polyuréthane selon la revendication 6, **caractérisée en ce que** le pourcentage volumique de cellules fermées est ≥ 80 %, de préférence ≥ 90 %, le pourcentage volumique de cellules fermées étant défini selon DIN ISO 4590.

8. Utilisation de la mousse de polyuréthane selon la revendication 6 ou 7 pour l'isolation thermique dans la technique du refroidissement, en particulier dans les équipements réfrigérateurs et/ou congélateurs, pour l'isolation thermique dans le secteur du bâtiment, de préférence comme panneau isolant, élément sandwich, pour l'isolation de canalisations, comme mousse pistolée,
pour l'isolation des parois de récipients et/ou de réservoirs, pour le stockage cryogénique à des températures < -50 °C,
pour l'isolation de parois de récipients et/ou de réservoirs pour stockage à froid à des températures de -50 °C à 20 °C,
en tant que constituant de système d'isolation cryogénique, de préférence des réservoirs ou des canalisations de gaz liquéfié, en particulier les réservoirs ou canalisations pour gaz pétrolier liquéfié (GPL), gaz éthylène liquéfié (GEL) ou gaz naturel liquéfié (GNL).

9. Utilisation de la mousse de polyuréthane selon la revendication 6 ou 7 en tant que matériau d'isolation et/ou de remplissage sous forme de mousse pistolée, qui est directement appliquée sur la surface à isoler et/ou à remplir et/ou est directement introduite dans les cavités correspondantes.
